# EUROPÄISCHE PATENTANMELDUNG

(11) **EP 4 375 062 A1**
(43) Veröffentlichungstag der Anmeldung: **29.05.2024**
(21) Anmeldenummer: 23212152.5
(22) Anmeldetag: 25.11.2023
(51) Int. Cl.: B32B 25/08, B32B 25/14, B32B 27/08, B32B 27/30, B32B 27/32

(54) **LAMINAT UMFASSEND EINE POLYETHYLENPOLYMERSCHICHT UND EINE ELASTOMERSCHICHT, DIE ZWEI ELASTOMERE ENTHÄLT**

(30) Priorität: 25.11.2022 DE 102022131267
(71) Anmelder: Gummiwerk Kraiburg GmbH & Co. KG, 84478 Waldkraiburg (DE)
(72) Erfinder: RUNSHENG, Lue, 84478 Waldkraiburg (DE)
(74) Vertreter: Baier, Martin

(57) **Zusammenfassung**

Die vorliegende Erfindung betrifft ein Laminat, welches mindestens zwei Schichten umfasst, wobei die erste Schicht i) mindestens ein Polyethylen-Polymer enthält und die zweite Schicht ii) mindestens ein erstes Elastomer (E1) und mindestens ein zweites thermoplastisches Elastomer (E2) enthält. Des Weiteren betrifft die vorliegende Erfindung ein Schichtverbundformteil, welches das Laminat verbunden mit einem faserverstärkten Kunststoff enthält, ein Verfahren zur Herstellung des Schichtverbundformteils, ein Windrad umfassend das Schichtverbundformteil sowie die Verwendung des erfindungsgemäßen Laminats in Windenergieanlagen.

## Beschreibung

Die vorliegende Erfindung betrifft ein Laminat, welches mindestens zwei Schichten umfasst, wobei die erste Schicht i) mindestens ein Polyethylen-Polymer enthält und die zweite Schicht ii) mindestens ein erstes Elastomer (E1) und mindestens ein zweites thermoplastisches Elastomer (E2) enthält. Des Weiteren betrifft die vorliegende Erfindung ein Schichtverbundformteil, welches das Laminat verbunden mit einem faserverstärkten Kunststoff enthält, ein Verfahren zur Herstellung des Schichtverbundformteils, ein Windrad umfassend das Schichtverbundformteil sowie die Verwendung des erfindungsgemäßen Laminats in Windenergieanlagen.

Die Energiegewinnung durch Windenergieanlagen ist seit Langem bekannt. Die in den Windenergieanlagen eingesetzten Rotorblätter sind während des Betriebs erheblichen Belastungen ausgesetzt. Hierzu gehören insbesondere der Winddruck, die Erosion beispielsweise durch Regen, Insekten oder Vogelflug, jahres- und tageszeitbedingte Temperaturschwankungen und UV-Einstrahlung. Die Belastung der Rotorblätter ist in Gebieten mit tropischem Klima durch wechselnde Witterungseinflüsse und insbesondere durch die hohe Luftfeuchtigkeit besonders hoch. Aber auch in gemäßigten Regionen wie beispielsweise Deutschland besteht beim Betrieb von Windenergieanlagen ein Problem durch Erosion der Rotorblätter.

Im Betrieb der Windenergieanlagen erreichen die Rotorblätter an den Spitzen Geschwindigkeiten von bis zu 300 km/h. Hierdurch wirken in der Luft enthaltene Partikel und Flüssigkeiten, wie beispielsweise Sandkörner, Salzpartikel, Insekten und andere Schwebeteilchen sowie Regentropfen, abnutzend bzw. abrasiv. Insbesondere im vorderen Kantenbereich werden die Rotorblätter somit sehr stark belastet und an diesen Stellen der Rotorblätter kommt es zu einem starken Verschleiß der Oberfläche der Rotorblätter, wodurch ein Verlust der Stabilität und der Aerodynamik der Rotorblätter verursacht wird.

Zur Verringerung der Abnutzung und Erosion von Rotorblättern in Windenergieanlagen sind im Stand der Technik verschiedene Lösungsvorschläge aufgeführt worden. Zur Verringerung der Erosion der Rotorblätter und der damit verbundenen Reparatur und Wartungsarbeiten wurde beispielsweise vorgeschlagen, die Drehzahl der Rotorblätter in den Energieanlagen zu verringern. Dies ist jedoch nachteilig, da die Verringerung der Drehzahl der Rotorblätter einer Windenergieanlage mit einer Verringerung der Leistung verbunden ist.

Aus diesem Grund wurde im Stand der Technik des Weiteren vorgeschlagen, die Erosionsbeständigkeit von Rotorblättern in Windenergieanlagen zu verbessern. Um die auf die Lager, gegebenenfalls vorhandenen Naben und den Turm der Windenergieanlage einwirkenden Belastungen, insbesondere Biegebelastungen, möglichst gering zu halten, ist es erstrebenswert, dass die Rotorblätter möglichst leicht sind.

Aus diesem Grund werden Rotorblätter und Rotorblattelemente üblicherweise aus mit Fasern verstärkten Kunstoffen hergestellt. Hierzu werden Fasermaterialien, wie Fasermatten, in eine Rotorblattform eingebracht und mit einer Harzzusammensetzung getränkt, die nachfolgend ausgehärtet wird. Das Einbringen von Fasermaterialien und das Auftragen der Harzzusammensetzung können zur Herstellung des Rotorblatts mehrfach wiederholt werden. Als Harzzusammensetzung von Rotorblättern oder anderen Teilen von Windkraftanlagen werden häufig Epoxidharzzusammensetzungen eingesetzt, die nachfolgend, beispielweise durch Erhitzen, ausgehärtet werden. Hierdurch werden Verbundformteile erhalten, die bei vergleichsweise geringem Gewicht relativ hohen mechanischen Beanspruchungen standhalten können.

Zum Schutz der Rotorblätter bzw. Rotorblattelemente gegen Erosion und Witterungseinflüsse wurde im Stand der Technik beispielweise vorgeschlagen, auf das Rotorblatt bzw. die Rotorblattelemente Folien oder Schichten aus Polyethylen aufzutragen, um einen Schutz gegen Erosion und Witterungseinflüsse zu erreichen.

In der WO 2017/068152 wird ein Rotorblatt offenbart, das eine Außenschicht aufweist, die zumindest teilweise aus Polyethylen besteht und die über eine weitere Schicht, die zumindest teilweise aus einem Elastomer und/oder einem Polyurethan besteht, mit einer Schicht aus einem faserverstärkten Kunststoff verbunden ist. Die zumindest teilweise aus Polyethylen bestehende Schicht und die zumindest teilweise aus Elastomer und/oder aus Polyurethan bestehende Schicht werden dabei zu einem Laminatverbund zusammengefügt und nachfolgend mit der Schicht aus dem faserverstärkten Kunststoff verbunden.

Das in der WO 2017/068152 offenbarte Rotorblatt weist eine gute Beständigkeit gegen Erosion und Witterungseinflüsse auf. Es besteht dennoch Raum für weitere Verbesserungen im Hinblick auf die Erosionsbeständigkeit von Rotorblättern und Beschichtungen für Rotorblätter.

Der vorliegenden Erfindung liegt somit die Aufgabe zugrunde, ein Laminat bereitzustellen, das eine Verbesserung der Erosionsbeständigkeit von Schichtverbundformteilen, insbesondere von Rotorblättern, ermöglicht. Das Laminat und die Schichtverbundformteile, die das Laminat enthalten, sollen darüber hinaus einfach und möglichst kostengünstig herstellbar sein.

Gelöst wird diese Aufgabe durch ein Laminat umfassend mindestens die Schichten i) und ii)
i) eine erste Schicht, die mindestens ein Polyethylen-Polymer enthält,
ii) eine zweite Schicht, die mindestens ein erstes Elastomer (E1) und mindestens ein zweites Elastomer (E2) enthält, wobei das mindestens eine zweite Elastomer (E2) mindestens ein thermoplastisches Elastomer ausgewählt aus der Gruppe bestehend aus Ethylen-α-Olefin-Copolymeren und Styrol-Alkylen-Blockcopolymeren ist.

Es wurde überraschend gefunden, dass durch den Einsatz der erfindungsgemäßen Kombination aus einem ersten Elastomer (E1) und dem thermoplastischen zweiten Elastomer (E2) in der zweiten Schicht (ii) Laminate erhalten werden, die eine verbesserte Erosionsbeständigkeit aufweisen. Schichtverbundformteile, in denen das erfindungsgemäße Laminat mit einer mit Fasern verstärkten Kunststoffschicht verbunden ist, weisen zudem eine verbesserte Haftung zwischen Laminat und faserverstärkter Kunststoffschicht auf. Das Verfahren zur Herstellung des erfindungsgemäßen Laminats läuft stabil und führt im Vergleich zu den im Stand der Technik offenbarten Laminat-Produktionsprozessen zu einer Reduzierung des Produktionsausschusses.

Ein weiterer Gegenstand der vorliegenden Erfindung ist ein Schichtverbundformteil umfassend das erfindungsgemäße Laminat, bei dem das Laminat mit einem mit Fasern verstärkten Kunststoff verbunden ist, wobei die erste Schicht i) des Laminats eine Außenseite des Schichtverbundformteils bildet und die zweite Schicht ii) des Laminats dem mit Fasern verstärkten Kunststoff zugewandt ist.

Ein weiterer Gegenstand der vorliegenden Erfindung ist ein Windrad umfassend das erfindungsgemäße Schichtverbundformteil.

Ein weiterer Gegenstand der vorliegenden Erfindung ist ein Verfahren zur Herstellung eines Schichtverbundformteils umfassend die Schritte
I) Herstellen oder Bereitstellen des erfindungsgemäßen Laminats
II) Zusammenfügen des hergestellten oder bereitgestellten Laminats mit dem mit Faser verstärkten Kunststoff.

Nachfolgend wird die Erfindung näher erläutert.

### Laminat umfassend die Schichten i) und ii)

Das Laminat umfasst mindestens die zwei Schichten i) und ii).

Der Ausdruck "mindestens zwei Schichten i) und ii)" bedeutet im Hinblick auf das Laminat im Rahmen der vorliegenden Erfindung genau zwei Schichten i) und ii) sowie drei oder mehrere Schichten, die in dem Laminat enthalten sind. Die Begriffe "mindestens zwei Schichten i) und ii)" und "zwei Schichten i) und ii)" werden im Rahmen der vorliegenden Erfindung synonym gebraucht.

Für den Fall, dass das Laminat neben den Schichten i) und ii) eine oder mehrere weitere Schichten umfasst, können diese Schichten über der Schicht i), unter der zweiten Schicht ii) und/oder zwischen den Schichten i) und ii) angeordnet sein.

In einer bevorzugten Ausführungsform ist im erfindungsgemäßen Laminat die erste Schicht i) unmittelbar auf der zweiten Schicht ii) angeordnet. Mit "unmittelbar auf" ist vorliegend gemeint, dass sich zwischen der ersten Schicht i) und der zweiten Schicht ii) keine weiteren Schichten befinden.

In einer besonders bevorzugten Ausführungsform besteht das Laminat aus der ersten Schicht i) und der zweiten Schicht ii). Dies bedeutet, dass das Laminat neben der ersten Schicht i) und der zweiten Schicht ii) keine weiteren Schichten enthält.

### erste Schicht i)

Die erste Schicht i) bildet bevorzugt die Oberseite des Laminats. Die erste Schicht i) enthält mindestens ein Polyethylen-Polymer.

Der Ausdruck "mindestens ein Polyethylen-Polymer" bedeutet im Rahmen der vorliegenden Erfindung genau ein Polyethylen-Polymer sowie Mischungen aus zwei oder mehreren Polyethylen-Polymeren. Die Begriffe "mindestens ein Polyethylen-Polymer" und "ein Polyethylen-Polymer" werden im Rahmen der vorliegenden Erfindung synonym gebraucht.

In einer bevorzugten Ausführungsform enthält die erste Schicht i) genau ein Polyethylen-Polymer.

Geeignete Polyethylen-Polymere sind bevorzugt hochmolekulares Polyethylen (HMW-PE), ultrahochmolekulares Polyethylen (UHMW-PE) und/oder Polytetrafluorethylen (PTFE).

Hochmolekulares Polyethylen (HMW-PE) wird auch als High Molecular Weight Polyethylen (HMW-PE) bezeichnet. Ultrahochmolekulares Polyethylen (UHMW-PE) wird auch als Ultra-High Molecular Weight Polyethylen (UHMW-PE) bezeichnet.

Als Polyethylen-Polymere besonders bevorzugt sind hochmolekulares Polyethylen (HMW-PE) und ultrahochmolekulares Polyethylen. Insbesondere bevorzugt ist ultrahochmolekulares Polyethylen.

Ein weiterer Gegenstand der vorliegenden Erfindung ist daher ein Laminat, das in der ersten Schicht i) mindestens ein Poylethylen-Polymer ausgewählt aus der Gruppe bestehend aus hochmolekularem Polyethylen (HMW-PE), ultrahochmolekularem Polyethylen (UHMW-PE) und Polytetrafluorethylen (PTFE) enthält.

Im Rahmen der vorliegenden Erfindung wird unter einem hochmolekularen Polyethylen (HMW-PE) ein Polyethylen-Polymer mit einer mittleren Molmasse von 500 bis kleiner 1.000 kg/mol verstanden.

Unter einem ultrahochmolekularen Polyethylen (UHMW-PE) wird im Rahmen der vorliegenden Erfindung ein Polyethylen-Polymer mit einer mittleren Molmasse von mindestens 1.000 kg/mol verstanden.

Bevorzugt sind im Rahmen der vorliegenden Erfindung ultrahochmolekulare Polyethylene (UHMW-PE) mit einer mittleren Molmasse im Bereich von 1.000 kg/mol bis 11.000 kg/mol, besonders bevorzugt mit einer mittleren Molmasse im Bereich von 3.000 kg/mol bis 10.200 kg/mol, insbesondere bevorzugt mit einer mittleren Molmasse im Bereich von 5.000 kg/mol bis 10.000 kg/mol. Die Bestimmung der mittleren Molmasse erfolgt rechnerisch durch die Margolies-Gleichung. Das erfindungsgemäße Polyethylen-Polymer kann linear, teilvernetzt oder vernetzt vorliegen.

Das eingesetzte ultrahochmolekulare Polyethylen (ohne Füllstoffe) hat vorzugsweise eine Dichte im Bereich von 0,91 bis 0,95 g/cm³.

Insbesondere das ultrahochmolekulare Polyethylen (UHMW-PE) zeichnet sich durch sehr gute Verschleiß- und Abriebfestigkeiten auch bei abrasiven Medien aus. Durch den Einsatz von ultrahochmolekularem Polyethylen (UHMW-PE) in der ersten Schicht i) kann die Verschleiß- und Abriebfestigkeit des erfindungsgemäßen Laminats und dem daraus hergestellten Schichtverbundformteil, insbesondere von Rotorblättern, signifikant verbessert werden.

In einer bevorzugten Ausführungsform enthält die im Laminat enthaltene erste Schicht i), bezogen auf 100 Gewichtsteile der Gesamtmenge des in der ersten Schicht i) enthaltenen mindestens einen Polyethylen-Polymers, maximal 10 Gewichtsteile weiterer Komponenten (K1).

Gegenstand der vorliegenden Erfindung ist daher auch ein Laminat in dem die erste Schicht i) bezogen auf 100 Gewichtsteile der Gesamtmenge des in der ersten Schicht i) enthaltenen mindestens einen Polyethylen-Polymers maximal 10 Gewichtsteile weiterer Komponenten (K1) enthält.

Die weiteren in der ersten Schicht i) enthaltenen Komponenten (K1) können beispielsweise ein oder mehrere UV-Stabilisator/en sein. Als UV-Stabilisatoren sind organische und anorganische UV-Absorber bevorzugt.

Bevorzugte UV-Stabilisatoren sind beispielsweis ausgewählt aus der Liste umfassend Benzophenone, Benzotriazole, Oxalanilide, Phenyltriazine, Ruß, Titandioxid, Eisenoxidpigmente und Zinkoxid oder 2,2,6,6-Tetramethylpiperidin-Derivate wie Bis(2,2,6,6-tetramethyl-4-piperidyl)sebacat ("Hindered amine light stabilizer (HALS)").

Durch die Anwesenheit eines UV-Stabilisators kann die Langzeitbeständigkeit des Laminats gegenüber UV-Licht erhöht werden.

### zweite Schicht ii)

Die zweite Schicht ii) bildet bevorzugt die Unterseite des Laminats. Die zweite Schicht ii) enthält mindestens ein erstes Elastomer (E1) und mindestens ein zweites Elastomer (E2), wobei das mindestens eine zweite Elastomer (E2) mindestens ein thermoplastisches Elastomer ausgewählt aus der Gruppe bestehend aus Ethylen-α-Olefin-Copolymeren und Styrol-Alkylen-Blockcopolymeren ist.

Der Ausdruck "mindestens ein erstes Elastomer (E1)" bedeutet im Rahmen der vorliegenden Erfindung genau ein erstes Elastomer (E1) sowie Mischungen aus zwei oder mehreren ersten Elastomeren (E1). Die Begriffe "mindestens ein erstes Elastomer (E1)" und "ein erstes Elastomer (E1)" werden im Rahmen der vorliegenden Erfindung synonym gebraucht.

In einer bevorzugten Ausführungsform enthält die zweite Schicht ii) genau ein erstes Elastomer (E1).

Als erstes Elastomer (E1) geeignete Elastomere sind beispielsweise Ethylen-Propylen-Polymer (EPM), Ethylen-Propylen-Dien-Polymer (EPDM), Ethylen-Acrylat-Polymer (EAM), Fluorkarbon-Polymer (FKM), Acrylat-Polymer (ACM), Ethylen-Vinylacetat-Polymer (EVA) und/oder Acrylnitril-Butadien-Polymer (NBR).

Gegenstand der vorliegenden Erfindung ist daher auch ein Laminat in dem das in der zweiten Schicht ii) enthaltene mindestens eine erste Elastomer (E1) mindestens ein Elastomer ausgewählt aus der Gruppe bestehend aus Ethylen-Propylen-Polymer (EPM), Ethylen-Propylen-Dien-Polymer (EPDM), Ethylen-Acrylat-Polymer (EAM), Fluorkarbon-Polymer (FKM), Acrylat-Polymer (ACM), Ethylen-Vinylacetat-Polymer (EVA) und Acrylnitril-Butadien-Polymer (NBR) ist.

Bevorzugt ist das erste Elastomer (E1) nicht thermoplastisch. In einer bevorzugten Ausführungsform liegt das erste Elastomer (E1) in der zweiten Schicht ii) im Laminat in vernetzter Form vor. Als Vernetzungsmittel zur Herstellung des mindestens einen ersten Elastomers (E1) in vernetzter Form können alle dem Fachmann bekannten Vernetzungsmittel eingesetzt werden.

Bevorzugte Vernetzungsmittel sind beispielsweise Schwefel und/oder Peroxid-basierte Vernetzungsmittel, wobei Peroxid-basierte Vernetzungsmittel besonders bevorzugt sind.

Peroxid-basierte Vernetzungsmittel sind dem Fachmann bekannt. Beispiele hierfür sind organische Peroxide, z.B. Alkyl- und Arylperoxide, Alkylpersäureester, Arylpersäureester, Diacylperoxide, polyvalente Peroxide wie 2,5-Dimethyl-2,5-di(tert-butylperoxy)hexin-3 (z.B. Trigonox^{®} 145-E85 oder Trigonox^{®} 145-45 B), Di-tert-butylperoxid (z.B. Trigonox^{®} B), 2,5-Dimethyl-2,5-di(tert-butylperoxy)hexan (z.B. Trigonox^{®} 101), tert-Butylcumylperoxid (z.B. Trigonox^{®} T), Di-(tert-butyl-peroxyisopropyl)benzol (z.B. Perkadox^{®} 14-40), Dicumylperoxid (z.B. Perkadox^{®} BC40), 2,2-bis(tert-Butylperoxy)diisopropylbenzol (z.B. Volcup^{®} 40 AE), 3,2,5-Trimethyl-2,5-di(benzoylperoxy)hexan und (2,5-bis(tert-butylperoxy)-2,5-dimethylhexan, Butyl-4,4'-di(tert-butylperoxy)valerat, 1,1'-bis(tert-Butylperoxy)-3,3,5-trimethylcyclohexan, 3,3,5,7,7-Pentamethyl-1,2,4-trioxepan (z.B. Trigonox^{®} 311), tert-Butylperoxybenzoat und tert-Butylperoxy-2-ethylhexylcarbonat.

Als Peroxid-basiertes Vernetzungsmittel kann beispielsweise mindestens ein Vernetzungsmittel ausgewählt aus der Gruppe bestehend aus Di(tert-Butylperoxyisopropyl)benzol, 2,5-Dimethyl-2,5-bis(tert-butyl)peroxy)hexan, Dicumylperoxid, Di(tert-Butyl)peroxid, Butyl-4,4'-di(tert-butylperoxy)valerat, 1,1'-Bis (tert-Butylperoxy)-3,3,5-trimethylcyclohexan, tert-Butylcumylperoxide, tert-Butylperoxybenzoat und tert-Butylperoxy-2-ethylhexylcarbonat eingesetzt werden.

Als Peroxid-basiertes Vernetzungsmittel sind 1,1-Bis(tert-Butylperoxy)-3,3,5-trimethylcyclohexan und 2,5-Dimethyl-2,5-di(tert-butylperoxy)hexan besonders bevorzugt.

Als erstes Elastomer (E1) wird besonders bevorzugt Ethylen-Propylen-Dien-Polymer (EPDM) und/oder Ethylen-Vinylacetat-Polymer (EVA) eingesetzt.

Geeignete Ethylen-Propylen-Dien-Polymere (EPDM) weisen im Allgemeinen eine Mooney-Viskosität (gemessen nach ISO 289; ML (1+4) 125°C) im Bereich von 20 bis 130 MU, bevorzugt im Bereich von 40 bis 110 MU und besonders bevorzugt im Bereich von 60 bis 90 MU auf.

Geeignete Ethylen-Propylen-Dien-Polymere (EPDM) weisen im Allgemeinen einen Ethylen-Gehalt (gemessen nach ASTM D 3900) im Bereich von 40 bis 80 Gew.-% bevorzugt im Bereich von 42 bis 70 Gew.-% und besonders bevorzugt im Bereich von 45 bis 60 Gew.-% auf.

Der Ausdruck "mindestens ein zweites Elastomer (E2)" bedeutet im Rahmen der vorliegenden Erfindung genau ein zweites Elastomer (E2) sowie Mischungen aus zwei oder mehreren zweiten Elastomeren (E2). Die Begriffe "mindestens ein zweites Elastomer (E2)" und "ein zweites Elastomer (E2)" werden im Rahmen der vorliegenden Erfindung synonym gebraucht.

In einer bevorzugten Ausführungsform enthält die zweite Schicht ii) genau ein zweites Elastomer (E2).

Das zweite Elastomer (E2) ist thermoplastisch. Im Rahmen der vorliegenden Anmeldung wird unter einem thermoplastischen Elastomer ein Elastomer verstanden, das bei seiner Gebrauchstemperatur Eigenschaften aufweist, die denen von vulkanisiertem Kautschuk ähnlich sind, das jedoch bei erhöhten Temperaturen wie ein thermoplastischer Kunststoff verarbeitet und aufbereitet werden kann.

Das in der zweiten Schicht ii) des Laminats enthaltene mindestens eine zweite Elastomer (E2) ist ein Ethylen-α-Olefin-Copolymere und/oder ein Styrol-Alkylen-Blockcopolymer.

Nachfolgend wird das Ethylen-α-Olefin-Copolymer näher beschrieben. Das Styrol-Alkylen-Blockcopolymer wird weiter unten näher beschrieben.

Ethylen-α-Olefin-Copolymere sind aus dem Stand der Technik bekannt. Sie können als statistische Copolymere oder als Blockcopolymere vorliegen und weisen eine gute Flexibilität und gute Elastizität auf.

Bevorzugt werden Ethylen-α-Olefin-Blockcopolymere eingesetzt. Ethylen-α-Olefin-Blockcopolymere weisen in der Regel eine gute Hitzebeständigkeit, einen hohen Schmelzpunkt, einen guten Druckverformungsrest und eine gute Elastizität auf. Ethylen-α-Olefin-Blockcopolymere können zudem im Spritzguss verarbeitet und zu Bahnen, Folien und Filmen extrudiert werden.

Erfindungsgemäß bevorzugt ist der Einsatz von Ethylen-α-Olefin-Blockcopolymeren, die im Wesentlichen frei von olefinisch ungesättigten Doppelbindungen sind.

Ebenfalls erfindungsgemäß bevorzugt ist der Einsatz von Ethylen-α-Olefin-Blockcopolymeren in Form eines linearen Multiblock-Copolymers aus Polyethylen-Blöcken und Poly-α-Olefin-Blöcken.

Im Rahmen der vorliegenden Erfindung wird unter einem Ethylen-α-Olefin-Blockcopolymer vorzugsweise ein Multiblock-Copolymer verstanden, das durch Polymerisation von mindestens zwei unterschiedlichen Monomeren hergestellt wird.

Bei den mindestens zwei unterschiedlichen Monomeren handelt es sich um das Ethylen-Monomer (auch als Ethen bezeichnet) und ein von Ethylen verschiedenes α-Alken-Monomer (im Folgenden werden in Bezug auf das Ethylen-α-Olefin-Blockcopolymer die unterschiedlichen Monomere auch als "Wiederholungseinheiten" bezeichnet).

Zur Herstellung des Ethylen-α-Olefin-Blockcopolymers werden neben dem Ethylen ein, zwei oder mehrere verschiedene α-Alken-Monomere eingesetzt.

Unter einem Multiblock-Copolymer wird ein Polymer verstanden, das zwei oder mehr chemisch unterschiedliche Bereiche oder Segmente (auch als "Blöcke" bezeichnet) aufweist, die vorzugsweise in linearer Weise miteinander verbunden sind, d.h. ein Polymer, das chemisch unterschiedliche Blöcke aufweist, die Ende-zu-Ende verbunden sind. In einer bevorzugten Ausführungsform unterscheiden sich die Blöcke hinsichtlich der Menge oder des Typs des darin verwendeten α-Alken-Monomers (das von Ethylen verschieden ist), der Dichte des kristallinen Anteils, der Kristallgröße, dem Typ oder Grad an Taktizität (isotaktisch oder syndiotaktisch), dem Verzweigungsgrad, der Homogenität und/oder anderen chemischen oder physikalischen Eigenschaften.

Das Multiblock-Copolymer kann bevorzugt gemäß der folgenden Formel aufgebaut sein:

(AB)ₙ

wobei n wenigstens 1, vorzugsweise ist eine ganze Zahl größer als 1, bspw. 2, 3, 4, 5, 10, 15, 20, 30, 40, 50, 60, 70, 80, 90, 100 oder höher.

Darüber hinaus können die Ethylen-α-Olefin-Blockcopolymer auch Triblock-Copolymere gemäß der nachfolgenden Formel sein:

ABA

"A" stellt in den vorstehenden Formeln ein hartes Segment und "B" stellt ein weiches Segment des Ethylen-α-Olefin-Blockcopolymers dar. Die Segmente A und B sind vorzugsweise in linearer Weise miteinander verknüpft. Die Segmente A und B werden nachfolgend genauer beschrieben.

Die Segmente A und B sind vorzugsweise statistisch entlang der Polymerkette verteilt. In anderen Worten hat das Multiblock-Copolymer (Ethylen-α-Olefin-Blockcopolymers) gewöhnlich nicht die Struktur AAA-AA-BBB-BB.

Die Multiblock-Copolymere (Ethylen-α-Olefin-Blockcopolymere) weisen in einer bevorzugten Ausführungsform keinen dritten Typ eines Blockes neben den Segmenten A und B auf. Jedes der Segmente A und B weist vorzugsweise statistisch verteilte Wiederholungseinheiten auf.

Das Ethylen-α-Olefin-Blockcopolymer weist vorzugsweise Wiederholungseinheiten, die sich von Ethylen ableiten (Ethylen-Wiederholungseinheiten), in einer Mehrzahl auf.

Dies bedeutet, dass das Ethylen-α-Olefin-Blockcopolymer bezogen auf die Gesamtmenge der Wiederholungseinheiten des Ethylen-α-Olefin-Blockcopolymers bevorzugt mindestens 50 Mol-%, mehr bevorzugt mindestens 60 Mol-%, noch mehr bevorzugt mindestens 70 Mol-% und am meisten bevorzugt mindestens 80 Mol-% Ethylen-Wiederholungseinheiten enthält.

Das Ethylen-α-Olefin-Blockcopolymer weist vorzugsweise Wiederholungseinheiten, die sich von α-Alken-Monomer(en) ableiten (α-Alken-Monomer-Wiederholungseinheiten) in einer Unterzahl auf.

Dies bedeutet, dass das Ethylen-α-Olefin-Blockcopolymer bezogen auf die Gesamtmenge der Wiederholungseinheiten des Ethylen-α-Olefin-Blockcopolymers bevorzugt im Bereich von 10 Mol-% bis 20 Mol-%, mehr bevorzugt im Bereich von 15 Mol-% bis 20 Mol-% α-Alken-Monomer-Wiederholungseinheiten enthält.

Der Gehalt an verschiedenen Wiederholungseinheiten in dem Ethylen-α-Olefin-Blockcopolymer kann mittels magnetischer Kernresonanz (NMR) bestimmt werden.

Unter einem "harten" Segment A versteht man vorzugsweise Polymerblöcke, in denen Ethylen-Wiederholungseinheiten bevorzugt in einer Menge von größer als 95 Gew.-%, mehr bevorzugt in einer Menge größer als 98 Gew.-% vorhanden sind, bezogen auf das Gesamtgewicht des Polymerblocks (des harten Segments A im Ethylen-α-Olefin-Blockcopolymer).

In anderen Worten ist der Gehalt an α-Alken-Monomer-Wiederholungseinheiten in den harten Segmenten A bevorzugt weniger als 5 Gew.-%, mehr bevorzugt weniger als 2 Gew.-%, bezogen auf das Gesamtgewicht des Segments A im Ethylen-α-Olefin-Blockcopolymer.

In manchen Ausführungsformen ist das harte Segment A vollständig aus Ethylen gebildet.

Unter einem "weichen" Segment B versteht man vorzugsweise Polymerblöcke in denen α-Alken-Monomer-Wiederholungseinheiten bevorzugt in einer Menge von größer als 5 Gew.-%, mehr bevorzugt in einer Menge von größer als 8 Gew.-%, noch mehr bevorzugt in einer Menge von größer als 10 Gew.-% und am meisten bevorzugt in einer Menge von größer als 15 Gew.-% vorhanden sind, bezogen auf das Gesamtgewicht des Polymerblocks (des weichen Segments B im Ethylen-α-Olefin-Blockcopolymer).

In manchen Ausführungsformen kann der Gehalt an α-Alken-Monomer-Wiederholungseinheiten in dem weichen Segment B größer als 20 Gew.-%, mehr bevorzugt größer als 25 Gew.-%, noch mehr bevorzugt größer als 30 Gew.-%, noch stärker bevorzugt größer als 35 Gew.-%, noch stärker bevorzugt größer als 40 Gew.-%, noch stärker bevorzugt größer als 45 Gew.-%, noch stärker bevorzugt größer als 50 Gew.-% und insbesondere bevorzugt größer als 60 Gew.-% sein, bezogen auf das Gesamtgewicht des weichen Segments B im Ethylen-α-Olefin-Blockcopolymer.

Die weichen Segmente B sind in dem Multiblock-Copolymer (dem Ethylen-α-Olefin-Blockcopolymer) vorzugsweise in einem Anteil von 1 Gew.-% bis 99 Gew.-%, von 5 Gew.-% bis 95 Gew.-%, von 10 Gew.-% bis 90 Gew.-%, von 15 Gew.-% bis 85 Gew.-%, von 20 Gew.-% bis 80 Gew.-%, von 25 Gew.-% bis 75 Gew.-%, von 30 Gew.-% bis 70 Gew.-%, von 35 Gew.-% bis 65 Gew.-%, von 40 Gew.-% bis 60 Gew.-%, von 45 Gew.-% bis 55 Gew.-%, vorhanden, bezogen auf das Gesamtgewicht des Ethylen-α-Olefin-Blockcopolymers.

Umgekehrt können die harten Segmente A in den gleichen Bereichen vorhanden sein, wobei die Summe der Gew.-%te der harten Segmente A und der weichen Segmente B im Ethylen-α-Olefin-Blockcopolymer vorzugsweise auf 100 Gew.-% ergibt.

Die Gewichtsanteile an weichem Segment B und harten Segmenten A im Ethylen-α-Olefin-Blockcopolymer können auf Basis von Daten errechnet werden, die aus der Differentialkaloriemetrie (DSC) oder magnetischer Kernresonanz (NMR) erhalten werden.

Bevorzugt weisen die Ethylen-α-Olefin-Blockcopolymere eine Dichte im Bereich von 0,86 g/cm³ bis 0,91 g/cm³ auf. Die Molekulargewichtsverteilung Mw/Mn, die auch als Polydispersität Q bezeichnet wird, liegt bei den Ethylen-α-Olefin-Blockcopolymeren vorzugsweise in einem Bereich von 1,5 bis 8,0, mehr bevorzugt in einem Bereich von 1,7 bis 3,5. Das gewichtsmittlere Molekulargewicht Mw der Ethylen-α-Olefin-Blockcopolymere liegt vorzugsweise in einem Bereich von 10.000 bis 2.500.000 g/mol, mehr bevorzugt von 20.000 bis 500.000 g/mol und am stärksten bevorzugt von 20.000 bis 350.000 g/mol. Die Bestimmung des gewichtsmittleren Molekulargewichts Mw und der Molekulargewichtsverteilung Mw/Mn erfolgt vorzugsweise mittels Gelpermeations-Chromatografie (GPC).

Geeignete Ethylen-α-Olefin-Blockcopolymere weisen im Allgemeinen eine Mooney-Viskosität (gemessen nach ASTM D1646; ML 1+4 121°C) im Bereich von 2 bis 55 MU, bevorzugt im Bereich von 5 bis 40 MU und besonders bevorzugt im Bereich von 6 bis 25 MU auf.

Die erfindungsgemäß bevorzugt eingesetzten Ethylen-α-Olefin-Blockcopolymere sind vorzugsweise Polymere, die sich von den Monomeren Ethylen und wenigstens einem C₃-C₂₀-α-Alkan ableiten.

Bevorzugt sind Ethylen-α-Olefin-Blockcopolymere, die durch Polymerisation von Ethylen mit mindestens einem der folgenden α-Alken-Monomere erhältlich sind, wie beispielsweise in α-Position einfach ungesättigte Verbindungen, wie in α-Position einfach ungesättigte C₃-C₂₀ aliphatische Verbindungen, oder aromatische Verbindungen, die in α-Position einen einfach ungesättigten Rest, wie eine Vinyl-Einheit, aufweisen.

Die in α-Position einfach ungesättigten C₃-C₂₀ aliphatischen Verbindungen können geradkettige, verzweigte oder zyklische Verbindungen sein. Beispiele für bevorzugte in α-Position einfach ungesättigte Verbindungen oder aromatische Verbindungen, die einen einfach ungesättigten Rest aufweisen, sind die Folgenden:
Propylen, Isobutylen, 1-Buten, 1-Penten, 1-Hexen, 1-Hepten, 1-Octen, 1-Nonen, 1-Decen, 1-Dodecen, 1-Tetradecen, 1-Hexadecen, 1-Octadecen, 1-Eicosen, 3-Methyl-1-Buten, 3-Methyl-1-Penten, 4-Methyl-1-Penten, 4,6-Dimethyl-1-Hepten, Vinylcyclohexan, Ethylidennorbornen, Cyclobuten, Cyclopenten, Cyclohexen, Cycloocten, Styrol, o-Methylstyrol, p-Methylstyrol, t-Butylstyrol und dergleichen. Besonders bevorzugt sind als 1-Olefine Propylen, 1-Buten, 1-Penten, 1-Hexen, 1-Octen oder eine Kombination davon, wobei 1-Buten und 1-Octen besonders bevorzugt sind.

In einer Ausführungsform ist es bevorzugt, dass Ethylen-α-Olefin-Blockcopolymere verwendet werden, die im Wesentlichen frei von olefinisch ungesättigten Doppelbindungen sind. Hierbei ist der Molanteil an olefinisch ungesättigten Doppelbindungen vorzugsweise kleiner als 0,5 Mol-%, stärker bevorzugt kleiner als 0,1 Mol-% und insbesondere bevorzugt kleiner als 0,01 Mol-%, bezogen auf die Molanzahl an allen für die Polymerisierung verwendeten Monomereinheiten des Ethylen-α-Olefin-Blockcopolymers.

Noch stärker bevorzugt enthält das Ethylen-α-Olefin-Blockcopolymer keine olefinisch ungesättigten Doppelbindungen. Am meisten bevorzugt setzt sich das Ethylen-α-Olefin-Blockcopolymer nur aus Wiederholungseinheiten zusammen, die von der Polymerisation von Ethylen und einfach ungesättigten C₃-C₂₀-α-Alkenen stammen.

Besonders bevorzugte Ethylen-α-Olefin-Blockcopolymere, die als zweites Elastomer ii) in der zweiten Schicht des Laminats enthalten sind, sind solche, die durch Polymerisation von Ethylen mit Propylen, 1-Buten, 1-Penten, 1-Hexen und/oder 1-Octen erhalten werden, wobei 1-Buten und 1-Octen besonders bevorzugt sind.

Die zuvor beschriebenen Ethylen-α-Olefin-Blockcopolymere sind beispielsweise unter den Markennamen INFUSE^{®} oder ENGAGE^{®} von The Dow Chemical Company erhältlich.

In einer besonders bevorzugten Ausführungsform enthält die zweite Schicht ii) des erfindungsgemäßen Laminats als thermoplastisches zweites Elastomer (E2) mindestens ein Ethylen-α-Olefin-Blockcopolymer ausgewählt aus der Gruppe bestehend aus Ethylen-1-Buten-Blockcopolymer und Ethylen-1-Octen-Blockcopolymer.

Als zweites Elastomer (E2) insbesonders bevorzugt ist Ethylen-1-Octen-Blockcopolymer.

Nachfolgend wird das Styrol-Alkylen-Blockcopolymer näher beschrieben.

Als zweites Elastomer (E2) können auch Styrol-Alkylen-Blockcopolymere eingesetzt werden. Bevorzugt ist das Styrol-Alkylen-Blockcopolymer ein Triblockcopolymer, bei dem die beiden terminalen Blöcke aus Polystyrol und der mittlere Block aus einem von Polystyrol verschiedenen Polymer gebildet sind. Dabei ist es bevorzugt, dass der mittlere Block des Triblockcopolymers von einem Polyolefin gebildet ist.

Das Styrol-Alkylen-Blockcopolymer ist bevorzugt mindestens ein Polymer ausgewählt aus der Gruppe bestehend aus Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS) und Styrol-Isopren-Styrol-Blockcopolymer (SIS).

Gegenstand der vorliegenden Erfindung ist daher auch ein Laminat, in dem das in der zweiten Schicht ii) enthaltene zweite Elastomer (E2) ausgewählt ist aus der Gruppe bestehend aus Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS) und Styrol-Isopren-Styrol-Blockcopolymer (SIS).

Weiterhin ist es bevorzugt, dass das Styrol-Alkylen-Blockcopolymer nicht mit einem Anhydrid einer organischen Säure, einem Vinylalkoxysilan, einem Vinylacyloxysilan, einem Methacryloxyalkylalkoxysilan oder einem Methacryloxyalkylacyloxysilan funktionalisiert ist. Stärker bevorzugt ist das Styrol-Alkylen-Blockcopolymer eines, das nicht mit einem Anhydrid einer ungesättigten organischen Säure, einem Vinylalkoxysilan, einem Vinylacyloxysilan, einem Methacryloxyalkylalkoxysilan oder einem Methacryloxyalkylacyloxysilan gepfropft ist. Das Styrol-Alkylen-Blockcopolymer ist vorzugsweise kein gepfropftes Styrol-Alkylen-Blockcopolymer. Das Styrol-Alkylen-Blockcopolymer ist vorzugsweise kein funktionalisiertes Styrol-Alkylen-Blockcopolymer.

Unter dem Begriff "Styrol-Alkylen-Blockcopolymer" wird erfindungsgemäß ein Mehrblockcopolymer verstanden, wobei mindestens einer der Blöcke Polystyrol ist.

Das Styrol-Alkylen-Blockcopolymer kann ein Triblockcopolymer der Struktur A'-B'-A' sein, wobei der A'-Block üblicherweise Polystyrol ist und der B'-Block üblicherweise aus Polyethylen, Polypropylen, Polybutylen, und/oder Polyisopren aufgebaut ist.

Alternativ können im A'-Block die Styrol-Monomere teilweise oder vollständig durch Derivate von Styrol, wie beispielsweise α-Methylstyrol, 2-Methylstyrol, 3-Methylstyrol, 4-Methylstyrol, 4-tert-Butylstyrol, 4-Cyclohexylstyrol und/oder Vinylnaphthaline wie 1-Vinylnaphthalin und 2-Vinylnaphthalin ersetzt werden.

Neben Triblock-, können alternativ auch Di-, Tetrablock- oder Multiblockcopolymere aus den genannten Monomeren von Styrol, Styrolderivaten (A`-Blöcke) und den vorstehend genannten B'-Blöcken in unterschiedlicher Reihung von A'- und B'-Blöcken (beispielsweise B'-A'-B'-A', A'-B'-A'-B', etc.) verwendet werden. Bevorzugte Styrol-Alkylen-Blockcopolymere haben den Aufbau eines Triblockcopolymers A'-B'-A'.

Erfindungsgemäße Styrol-Alkylen-Blockcopolymere haben bevorzugt ein gewichtsmittleres Molgewicht (Mw) von 50.000 bis 1.000.000 g/mol, besonders bevorzugt von 100.000 bis 500.000 g/mol.

In einer bevorzugten Ausführungsform ist das Styrol-Alkylen-Blockcopolymer im Wesentlichen frei von olefinisch ungesättigten Doppelbindungen. Hierbei ist der Molanteil an olefinisch ungesättigten Doppelbindungen vorzugsweise kleiner als 0,5 Mol-%, stärker bevorzugt kleiner als 0,1 Mol-% und insbesondere bevorzugt kleiner als 0,01 Mol-%, bezogen auf die Molanzahl an allen für die Polymerisierung verwendeten Monomereinheiten des Styrol-Alkylen-Blockcopolymers. Solche Styrol-Alkylen-Blockcopolymere werden auch als hydrierte Styrol-Alkylen-Blockcopolymere bezeichnet.

Bevorzugt liegt das zweite Elastomer (E2) in der zweiten Schicht ii) im Laminat in zumindest teilweise vernetzter Form, besonders bevorzugt in vollständig vernetzter Form, vor. Als Vernetzungsmittel zur Herstellung des mindestens einen zweiten Elastomers (E2) in vernetzter Form können alle dem Fachmann bekannten Vernetzungsmittel eingesetzt werden. Bevorzugt sind Peroxid-basierte Vernetzungsmittel, wobei die vorstehend gemachten Ausführungen und Bevorzugungen im Hinblick auf das erste Elastomer (E1) entsprechend gelten.

Besonders bevorzugt liegen sowohl das mindestens eine erste Elastomer (E1) als auch das mindestens eine zweite Elastomer (E2) in der zweiten Schicht ii) des Laminats in vernetzter Form vor. Bevorzugt werden das mindestens eine erste Elastomer (E1) in vernetzter Form und das mindestens eine zweite Elastomer (E2) in vernetzter Form durch den Einsatz des gleichen Vernetzungsmittels hergestellt.

Bevorzugt ist ein Laminat, bei dem das in der zweiten Schicht ii) enthaltene mindestens eine zweite Elastomer (E2), ausgewählt ist aus der Gruppe bestehend aus Ethylen-α-C₃-C₂₀-Alken-Copolymer, Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS) und Styrol-Isopren-Styrol-Blockcopolymer (SIS), wobei das Ethylen-α-C₃-C₂₀-Alken-Copolymer besonders bevorzugt ist.

Besonders bevorzugt ist ein Laminat, das in der zweiten Schicht ii) als erstes Elastomer (E1) ein Ethylen-Propylen-Dien-Polymer (EPDM) und als zweites Elastomer (E2) ein Ethylen-α-C₃-C₂₀-Alken-Copolymer enthält, wobei als zweites Elastomer (E2) ein Ethylen-1-Octen-Blockcopolymer bevorzugt ist.

Das Gewichtsverhältnis von erstem Elastomer (E1) zu zweitem Elastomer (E2) in der zweiten Schicht ii) des Laminats liegt bevorzugt im Bereich von 10:90 bis 90:10, besonders bevorzugt im Bereich von 30:70 bis 70:30 und insbesondere im Bereich von 40:60 bis 60:40.

Bevorzugt enthält die im Laminat enthaltene zweite Schicht ii) bezogen auf 100 Gewichtsteile der Gesamtmenge der in der zweiten Schicht enthaltenen Elastomere (E1) und (E2) maximal 200 Gewichtsteile, besonders maximal bevorzugt 135 Gewichtsteile weiterer Komponenten (K2).

Ein weiterer Gegenstand der vorliegenden Erfindung ist somit ein Laminat, in dem die zweite Schicht ii) bezogen auf 100 Gewichtsteile der Gesamtmenge der in der zweiten Schicht enthaltenen Elastomere (E1) und (E2) maximal 200 Gewichtsteile weiterer Komponenten (K2) enthält.

Geeignete weitere Komponenten (K2) im Hinblick auf die zweite Schicht ii) des Laminats sind beispielsweise Additive, Weichmacher und Füllstoffe.

Geeignete Additive sind beispielsweise ausgewählt aus der Gruppe bestehend aus Alterungsschutzmitteln, Verarbeitungshilfsmitteln, Farbpigmenten, Blähmitteln, Flammschutzmitteln, Haftvermittlern, Gleitmitteln und Entformungshilfen.

Geeignete Füllstoffe sind beispielsweise ausgewählt aus der Gruppe bestehend aus Rußen sowie mineralischen Füllstoffen, wie Kieselsäure, Kaoline, Kreide, Kieselkreide, Aluminiumtrihydrate, Magnesiumhydoxide, Bariumsulfat, Talkum, Kieselgur und Zeolithe.

Verfahren zur Herstellung des Laminats, das die erste Schicht i) und die zweite Schicht ii) enthält, sind dem Fachmann bekannt.

Zur Herstellung des erfindungsgemäßen Laminats wird die erste Schicht i) bevorzugt in Form einer ersten Bahn (Bi) mit einer Breite im Bereich von 40 bis 150 cm, bevorzugt von 60 bis 120 cm, insbesondere bevorzugt von 80 bis 100 cm bereitgestellt.

Die Dicke der in Form einer ersten Bahn (Bi) bereitgestellten ersten Schicht i) liegt vorzugsweise im Bereich von 0,2 bis 2,5 mm, bevorzugt von 0,4 bis 1,5 mm, insbesondere bevorzugt von 0,5 bis 1,0 mm.

Für die erste Bahn (Bi) gelten die vorstehend gemachten Ausführungen und Bevorzugungen im Hinblick auf die erste Schicht i) entsprechend.

Zum Herstellen der ersten Bahn (Bi) wird das mindestens eine Polyethylenpolymer gegebenenfalls mit den weiteren Komponenten (K1) compoundiert. Das Compoundieren kann in gängigen Mischvorrichtungen erfolgen. Der so erhaltene Compound (C1) kann nachfolgend in geeigneten Vorrichtungen beispielsweise durch Molding, Sintering und/oder Skiving zu der ersten Bahn (Bi) verarbeitet werden.

Zur Herstellung des Laminats wird darüber hinaus bevorzugt die zweite Schicht ii) in Form einer zweiten Bahn (Bii) mit einer Breite im Bereich von 40 bis 150 cm, bevorzugt von 60 bis 120 cm, insbesondere bevorzugt von 80 bis 100 cm bereitgestellt.

Die Dicke der in Form einer zweiten Bahn (Bii) bereitgestellten zweiten Schicht ii) liegt vorzugsweise im Bereich von 0,2 bis 2,5 mm, bevorzugt von 0,3 bis 1,5 mm, insbesondere bevorzugt von 0,5 bis 1,0 mm.

Die in der zweiten Bahn (Bii) enthaltenen Elastomere (E1) und (E2) können in unvernetzter oder vernetzter Form vorliegen.

Bevorzugt liegen die in der zweiten Bahn (Bii) enthaltenen Elastomere (E1) und (E2) in unvernetzter Form vor. In dieser Ausführungsform enthält die Bahn (Bii) mindestens ein Vernetzungsmittel, wobei die vorstehend gemachten Beschreibungen und Bevorzugungen im Hinblick auf das Vernetzungsmittel entsprechend gelten. Bevorzugt enthält die zweite Bahn (Bii) ein Peroxid-basiertes Vernetzungsmittel, insbesondere bevorzugt 1,1-Bis(tert-Butylperoxy)-3,3,5-trimethylcyclohexan.

Zur Herstellung der zweiten Bahn (Bii) werden bevorzugt das mindestens eine erste Elastomer (E1) und das mindestens eine zweite Elastomer (E2), gegebenenfalls zusammen mit den vorstehend beschriebenen Komponenten (K2), zu einem Compound (C2) verarbeitet. Die Herstellung des Compounds (C2) kann in bekannten Mischvorrichtungen, wie Kneter-Mischern, erfolgen. Der so hergestellte Compound (C2) kann nachfolgend zur zweiten Bahn (Bii) verarbeitet werden. Geeignete Vorrichtungen hierfür sind beispielsweise Kalander und Extruder.

Für den Fall, dass die zweite Bahn (Bii) die Elastomere (E1) und (E2) in unvernetzter Form enthält, enthält Compound (C2) zusätzlich mindestens ein Vernetzungsmittel, wobei auch hierbei die vorstehend gemachten Ausführungen und Bevorzugungen entsprechend gelten.

Die bereitgestellte erste Bahn (Bi) und die bereitgestellte zweite Bahn (Bii) werden nachfolgend zusammengefügt, wodurch das Laminat erhalten wird. Geeignete Vorrichtungen hierfür sind beispielsweise Automatische Mattenvulkanisieranlagen (AUMA) und Heißpressenanlagen.

In einer bevorzugten Ausführungsform enthält die zweite Bahn (Bii) die beiden Elastomere (E1) und (E2) in unvernetzter Form. In diesem Fall werden die in der zweiten Bahn (Bii) enthaltenen Elastomere (E1) und (E2) während oder nach dem Zusammenfügen mit der ersten Bahn (Bi) vernetzt, um das Laminat zu erhalten.

Diese Ausführungsform ist bevorzugt, da hierdurch eine optimale Haftung zwischen der ersten Schicht i) und der zweiten Schicht ii) im Laminat erhalten wird. Die Vernetzung der in der zweiten Bahn (Bii) erhaltenen Elastomere (E1) und (E2) erfolgt nach allgemein bekannten Verfahren durch Energiezufuhr, vorzugsweise durch die Zuführung von Wärme.

### Schichtverbundformteil umfassend das Laminat

Ein weiterer Gegenstand der vorliegenden Erfindung ist ein Schichtverbundformteil, das das Laminat enthält, wobei das Laminat mit einem mit Fasern verstärkten Kunststoff verbunden ist und wobei die erste Schicht i) des Laminats die Außenseite des Schichtverbundformteils bildet und die zweite Schicht ii) des Laminats dem mit Fasern verstärkten Kunststoff zugewandt ist.

Die erste Schicht i) des Laminats bildet somit bevorzugt die Außenseite des Schichtverbundformteils, an die sich in der Richtung von Außenseite nach Innenseite die zweite Schicht ii) des Laminats, vorzugsweise unmittelbar, anschließt. An die der ersten Schicht i) des Laminats abgewandten Seite der zweiten Schicht ii) des Laminats schließt sich im Schichtverbundformteil der mit Fasern verstärkte Kunststoff an.

Zwischen der zweiten Schicht ii) des Laminats und dem mit Fasern verstärkten Kunststoff des Schichtverbundformteils können weitere Schichten angeordnet sein.

Es ist auch möglich, dass die zweite Schicht ii) des Laminats unmittelbar mit dem mit Fasern verstärkten Kunststoff verbunden ist.

In einer bevorzugten Ausführungsform ist zwischen der zweiten Schicht ii) des Laminats und dem mit Fasern verstärkten Kunststoff des Schichtverbundformteils eine dritte Schicht iii) angeordnet. Die dritte Schicht iii) umfasst bevorzugt mindestens einen Klebstoff, ausgewählt aus der Gruppe bestehend aus Polyurethanklebstoffen, Methyl(meth)acrylatklebstoffen und Epoxidklebstoffen.

Gegenstand der vorliegenden Erfindung ist somit auch ein Schichtverbundformteil bei dem das Laminat mit dem mit Fasern verstärkten Kunststoff durch eine dritte Schicht iii) verbunden ist, die mindestens einen Klebstoff enthält, der ausgewählt ist aus der Gruppe bestehend aus Polyurethan-Klebstoffen, Methyl(meth)acrylat-Klebstoffen und Epoxid-Klebstoffen.

Der mit Fasern verstärkte Kunststoff weist in einer bevorzugten Ausführungsform Fasern auf, ausgewählt aus der Gruppe bestehend aus Ultra-High-Molecular-Weight Polyethylenfasern (UHMW-PE-Fasern), Carbonfasern und Glasfasern, wobei Glasfasern besonders bevorzugt sind.

Ein weiterer Gegenstand der Erfindung ist somit auch Schichtverbundformteil bei dem die Faser des mit Fasern verstärkten Kunststoffs mindestens eine Faser ausgewählt aus der Gruppe bestehend aus Ultra-High-Molecular-Weight-Polyethylen-Fasern (UHMW-PE-Fasern), Carbonfasern und Glasfasern ist.

Der Kunststoff des mit Fasern verstärkten Kunststoffes ist bevorzugt ausgewählt aus der Gruppe der Kunststoffe bestehend aus Kunststoffen auf Epoxidbasis, Copolyurethanbasis, Poly(meth)acrylatbasis, Polymethyl(meth)acrylatbasis und Poly(meth)acrylamidbasis.

Ein weiterer Gegenstand der vorliegenden Erfindung ist daher auch ein Schichtverbundformteil bei dem der Kunststoff des mit Fasern verstärkten Kunststoffs mindestens ein Kunststoff auf Epoxid-Basis, Polyurethan-Basis, Poly(meth)acrylatBasis, Polymethyl(meth)acrylat-Basis oder Poly(meth)acrylamid-Basis ist.

Die Herstellung des Schichtverbundformteils erfolgt nach dem Fachmann bekannten Verfahren. Üblicherweise wird hierzu im Formgebungsverfahren zunächst der mit Fasern verstärkte Kunststoff bereitgestellt. Auf die Oberfläche des so bereitgestellten mit Fasern verstärkten Kunststoffes wird nachfolgend das erfindungsgemäße Laminat aufgebracht und mit der Oberfläche verbunden. Der mit Fasern verstärkte Kunststoff kann dabei in ausgehärteter oder nicht ausgehärteter Form vorliegen.

Für den Fall, dass der mit Fasern verstärkte Kunststoff in nicht ausgehärteter Form bereitgestellt wird, kann das Laminat direkt, das heißt ohne den Einsatz einer dritten Schicht iii), aufgebracht werden. Beim Aushärten des mit Fasern verstärkten Kunststoffes wird dann eine Bindung zwischen der zweiten Schicht ii) des Laminats und der Oberseite des mit Fasen verstärkten Kunststoffes erreicht.

In einer weiteren Ausführungsform wird der mit Fasern verstärkte Kunststoff bereits in ausgehärteter Form bereitgestellt. In dieser Ausführungsform kann es vorteilhaft sein, die zwischen der zweiten Schicht ii) des Laminats und der Oberseite des mit Fasern verstärkten Kunststoffes die vorstehend beschriebene dritte Schicht iii) anzubringen, um eine gute Haftung zwischen dem Laminat und dem mit Fasern verstärkten Kunststoff sicherzustellen.

Das erfindungsgemäße Laminat und das erfindungsgemäße Schichtverbundteil, welches das Laminat enthält, zeichnen sich durch hervorragende Witterungsbeständigkeit und Erosionsbeständigkeit aus. Sie sind daher gut für den Einsatz in Windkraftanlagen geeignet.

Ein weiterer Gegenstand der vorliegenden Erfindung ist daher auch ein Rotorblatt, welches das Laminat enthält. Ein weiterer Gegenstand ist ein Rotorblatt, welches das erfindungsgemäße Schichtverbundteil enthält. Ein weiterer Gegenstand der vorliegenden Erfindung ist darüber hinaus ein Schichtverbundformteil, das ein Rotorblatt ist.

Die vorliegende Erfindung wird durch die nachfolgenden Beispiele näher erläutert, ohne sich jedoch hierauf zu beschränken.

### Beispiele

Es wurde die folgenden Laminate hergestellt und untersucht:

### Vergleichsbeispiel:

Als erste Schicht i) wurde ein ultrahochmolekulares Polyethylenpolymer mit einer mittleren Molmasse von 8.700 kg/mol und einer Dichte von 0.93 g/cm³ eingesetzt.

Für die zweite Schicht ii) wurde eine Elastomerzusammensetzung (VE) aus dem Stand der Technik, die durch Vernetzen der folgenden Zusammensetzung erhalten wurde, eingesetzt.

### Gewichtsteile [phr]

- 50: EPDM (CAS-Nr. 25038-36-2) mit einer Mooney Viskosität von 80 MU (gemessen nach ISO 289; ML (1+4) 125°C), einem Ethylen-Gehalt (gemessen nach ASTM D 3900) von 48 Gew.-% und einer Dichte von 0,86 g/cm³
- 50: EPDM (CAS-Nr. 25038-36-2) mit einer Mooney Viskosität von 25 MU (gemessen nach ISO 289; ML (1+4) 125°C), einem Ethylen-Gehalt (gemessen nach ASTM D 3900) von 53 Gew.-% und einer Dichte von 0,86 g/cm³
- 0,1: Ruß (CAS-Nr. 1333-86-4)
- 50: Kieselsäure (CAS-Nr. 7631-86-9)
- 35: Paraffinöl (CAS-Nr. 64742-54-7)
- 1,6: UV-Stabilisator (CAS-Nr. 202483-55-4)
- 0,1: Inhibitor (CAS-Nr. 88-27-7)
- 3: Titandioxid (CAS-Nr. 13463-67-7)
- 15: Coagens für Vernetzung (CAS-Nr. 3290-92-4)
- 5: Peroxid-Vernetzungsmittel (CAS-Nr. 6731-36-8)

### Erfindungsgemäßes Beispiel:

Als erste Schicht i) wurde ein ultrahochmolekulares Polyethylenpolymer mit einer mittleren Molmasse von 8.700 kg/mol und einer Dichte von 0.93 g/cm³ eingesetzt.

Für die zweite Schicht ii) wurde eine Elastomerzusammensetzung (EE), die durch Vernetzen der folgenden Zusammensetzung erhalten wurde, eingesetzt.

### Gewichtsteile [phr]

- 40: EPDM (CAS-Nr. 25038-36-2) mit einer Mooney Viskosität von 80 MU (gemessen nach ISO289; ML (1+4) 125°C), einem Ethylen-Gehalt (gemessen nach ASTM D 3900) von 48 Gew.-% und einer Dichte von 0,86 g/cm³
- 60: Ethylen-1-Octen-Blockcopolymer (CAS-Nr. 26221-73-8) mit einer Mooney Viskosität von 8 MU (gemessen nach ASTM D1646; ML 1+4 121°C) und einer Dichte von 0.87 g/cm³.
- 0,1: Ruß (CAS-Nr. 1333-86-4)
- 50: Kieselsäure (CAS-Nr. 7631-86-9)
- 45: Paraffinöl (CAS-Nr. 64742-54-7)
- 1,6: UV-Stabilisator (CAS-Nr. 202483-55-4)
- 0,1: Inhibitor (CAS-Nr. 88-27-7)
- 3: Titandioxid (CAS-Nr. 13463-67-7)
- 10: Coagens für Vernetzung (CAS-Nr. 3290-92-4)
- 8: Peroxid-Vernetzungsmittel (CAS-Nr. 6731-36-8)

Aus der Elastomerzusammensetzung (VE) aus dem Vergleichsbeispiel und dem vorstehend beschriebenen ultrahochmolekularen Polyethylenpolymer wurde ein aus dem Stand der Technik bekanntes Laminat (Vergleichslaminat VL) hergestellt.

Darüber hinaus wurde aus der Elastomerzusammensetzung (EE) aus dem erfindungsgemäßen Beispiel und dem vorstehend beschriebenen ultrahochmolekularen Polyethylenpolymer ein erfindungsgemäßes Laminat (erfindungsgemäßes Laminat EL) hergestellt.

Mit dem Vergleichslaminat (VL) und dem erfindungsgemäßen Laminat (EL) wurden Regen-Erosionstests nach dem internationalen Standard DNVGL-RP-0171 (*Testing of rotor blade erosion protection systems*) durchgeführt.

Hierzu wurden drei Vergleichsschichtverbundformteile (VFT1, VFT2 und VFT3) und drei erfindungsgemäße Schichtverbundformteile (EFT1, EFT2 und EFT3) hergestellt, wobei als mit Fasern verstärkter Kunststoff jeweils ein mit Glasfasern verstärktes Epoxid-Infusionsharz eingesetzt wurde, auf das dann jeweils die Laminate (VFT bzw. EFT) mittels eines Epoxid-Klebstoffs aufgeklebt wurden.

Als Testapparatur wurde ein Regen Erosionstester der Firma R&D Test Systems als eingesetzt (Rain Erosion Tester; by R&D Test Systems a/s).

Die Regen-Erosionstests wurden unter den folgenden Bedingungen durchgeführt:

| **Testparameter** | **Einheit** | **Wert** |
|---|---|---|
| Testdauer | [min] | 540 (VFT); 960 (EFT) |
| Aufprallgeschwindigkeit im Zentrum des Testkörpers | [m/s] | 125,5 |
| Wassertemperatur | [°C] | 2 |
| Wasserqualität | [µS/cm] | 2 |
| Testkammertemperatur | [°C] | 2 |
| Testkammerdruck | [Pa] | 2 |
| Mittlerer Tropfendurchmesser | [mm] | 2,5662 +/-13,3 % |
| Regenintensität in Expositionszone | [m/s] | 8,707 × 10⁻⁶ |
| Max. Aufprallgeschwindigkeit | [m/s] | 149,9 |
| Min. Aufprallgeschwindigkeit | [m/s] | 101,1 |
| Spezif. Aufprallfrequenz pro Zeiteinheit in Expositionszone | [Aufprall/m²×s] | 50.364 |

Die Proben wurden alle 30 Minuten visuell untersucht. Die Ergebnisse für die Regen-Erosionstests sind in der nachfolgenden Tabelle angegeben.

### Vergleichsschichtverbundformteile (VFT1, VFT2 und VFT3)

| **Testparameter** | **Einheit** | **Wert** |
|---|---|---|
| Fehler Modus | [-] | Erosion |
| Erosionsbeginn | [min] | VFT1: 60 |
| | | VFT2: 60 |
| | | VFT3: 90 |
| Erosionsdurchbruch | [min] | VFT1: 480 |
| | | VFT2: 450 |
| | | VFT3: 480 |

### Erfindungsgemäße Schichtverbundformteile (EFT1, EFT2 und EFT3)

| Testparameter | Einheit | Wert |
|---|---|---|
| Fehler Modus | [-] | Erosion |
| Erosionsbeginn | [min] | EFT1: 150 |
| | | EFT2: 120 |
| | | EFT3: 120 |
| Erosionsdurchbruch | [min] | EFT1: 930 |
| | | EFT2: 840 |
| | | EFT3: 840 |

Die Regen-Erosionstests zeigen, dass die erfindungsgemäßen Laminate zu einer signifikanten Verbesserung der Erosionsbeständigkeit von Schichtverbundformteilen, wie Rotorblättern, führen.

## Patentansprüche

1. Laminat umfassend mindestens die Schichten i) und ii)
i) eine erste Schicht, die mindestens ein Polyethylen-Polymer enthält,
ii) eine zweite Schicht, die mindestens ein erstes Elastomer (E1) und mindestens ein zweites Elastomer (E2) enthält, wobei das mindestens eine zweite Elastomer (E2) mindestens ein thermoplastisches Elastomer ausgewählt aus der Gruppe bestehend aus Ethylen-α-Olefin-Copolymeren und Styrol-Alkylen-Blockcopolymeren ist.

2. Laminat gemäß Anspruch 1, **dadurch gekennzeichnet, dass** das in der ersten Schicht i) enthaltene mindestens eine Polyethylen-Polymer mindestens ein Polyethylen-Polymer ausgewählt aus der Gruppe bestehend aus hochmolekularem Polyethylen (HMW-PE), ultrahochmolekularem Polyethylen (UHMW-PE) und Polytetrafluorethylen (PTFE) ist.

3. Laminat gemäß Anspruch 1 oder 2, **dadurch gekennzeichnet, dass** das in der zweiten Schicht ii) enthaltene mindestens eine erste Elastomer (E1) mindestens ein Elastomer ausgewählt aus der Gruppe bestehend aus Ethylen-Propylen-Polymer (EPM), Ethylen-Propylen-Dien-Polymer (EPDM), Ethylen-Acrylat-Polymer (EAM), Fluorkarbon-Polymer (FKM), Acrylat-Polymer (ACM), Ethylen-Vinylacetat-Polymer (EVA) und Acrylnitril-Butadien-Polymer (NBR) ist.

4. Laminat gemäß einem der Ansprüche 1 bis 3, **dadurch gekennzeichnet, dass** das in der zweiten Schicht ii) enthaltene mindestens eine zweite Elastomer (E2) mindestens ein Elastomer ausgewählt aus der Gruppe bestehend aus Ethylen-α-C₃-C₂₀-Alken-Copolymer, Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS) und Styrol-Isopren-Styrol-Blockcopolymer (SIS) ist.

5. Laminat gemäß einem der Ansprüche 1 bis 4, **dadurch gekennzeichnet, dass** die erste Schicht i) bezogen auf 100 Gewichtsteile der Gesamtmenge des in der ersten Schicht i) enthaltenen mindestens einen Polyethylen-Polymers maximal 10 Gewichtsteile weiterer Komponenten (K1) enthält.

6. Laminat gemäß einem der Ansprüche 1 bis 5, **dadurch gekennzeichnet, dass** die zweite Schicht ii) bezogen auf 100 Gewichtsteile der Gesamtmenge der in der zweiten Schicht enthaltenen Elastomere (E1) und (E2) maximal 200 Gewichtsteile weiterer Komponenten (K2) enthält.

7. Laminat gemäß einem der Ansprüche 1 bis 6, **dadurch gekennzeichnet, dass** das in der zweiten Schicht ii) enthaltene mindestens eine erste Elastomer (E1) und/oder das in der zweiten Schicht ii) enthaltene mindestens eine zweite Elastomer (E2) in vernetzter Form vorliegen.

8. Laminat gemäß einem der Ansprüche 1 bis 7, **dadurch gekennzeichnet, dass** das in der zweiten Schicht ii) enthaltene mindestens eine erste Elastomer (E1) ein nicht thermoplastisches Elastomer ist.

9. Schichtverbundformteil umfassend ein Laminat gemäß einem der Ansprüche 1 bis 8, **dadurch gekennzeichnet, dass** das Laminat mit einem mit Fasern verstärkten Kunststoff verbunden ist, wobei die erste Schicht i) des Laminats eine Außenseite des Schichtverbundformteils bildet und die zweite Schicht ii) des Laminats dem mit Fasern verstärkten Kunststoff zugewandt ist.

10. Schichtverbundformteil gemäß Anspruch 9, **dadurch gekennzeichnet, dass** die Faser des mit Fasern verstärkten Kunststoffs mindestens eine Faser ausgewählt aus der Gruppe bestehend aus Ultra High Molecular Weight Polyethylen-Fasern (UHMW-PE-Fasern), Carbonfasern und Glasfasern ist.

11. Schichtverbundformteil gemäß Anspruch 9 oder 10, **dadurch gekennzeichnet, dass** der Kunststoff des mit Fasern verstärkten Kunststoffs mindestens ein Kunststoff auf Epoxid-Basis, Polyurethan-Basis, Poly(meth)acrylat-Basis, Polymethyl(meth)acrylat-Basis oder Poly(meth)acrylamid-Basis ist.

12. Schichtverbundformteil gemäß einem der Ansprüche 9 bis 11, **dadurch gekennzeichnet, dass** das Laminat mit dem mit Fasern verstärkten Kunststoff durch eine dritte Schicht iii) verbunden ist die mindestens einen Klebstoff enthält, der ausgewählt ist aus der Gruppe bestehend aus Polyurethan-Klebstoffen, Methyl(meth)acrylat-Klebstoffen und Epoxid-Klebstoffen.

13. Schichtverbundformteil gemäß einem der Ansprüche 9 bis 12, **dadurch gekennzeichnet, dass** das Schichtverbundformteil ein Rotorblatt ist.

14. Windrad umfassend ein Schichtverbundformteil gemäß einem der Ansprüche 9 bis 13.

15. Verfahren zur Herstellung eines Schichtverbundformteils gemäß einem der Ansprüche 9 bis 13 umfassend die Schritte
I) Herstellen oder Bereitstellen eines Laminats gemäß einem der Ansprüche 1 bis 8
II) Zusammenfügen des hergestellten oder bereitgestellten Laminats mit dem mit Faser verstärkten Kunststoff.
